# EUROPÄISCHE PATENTANMELDUNG

(11) **EP 4 123 854 A1**
(43) Veröffentlichungstag der Anmeldung: **25.01.2023**
(21) Anmeldenummer: 21187310.4
(22) Anmeldetag: 22.07.2021
(51) Int. Cl.: H02G 3/30, A47B 57/40, A47B 57/42, A47B 96/06, F16L 3/223, F16L 3/23, F16L 3/24, F16L 3/26, H02G 3/04, A47B 57/52

(54) **AUSLEGER UND TRAGVORRICHTUNG**

(71) Anmelder: Zurecon AG, 9053 Teufen AR (CH)
(72) Erfinder: Gerster, Alexander, 8006 Zürich (CH)
(74) Vertreter: Rutz & Partner

(57) **Zusammenfassung**

Der Ausleger (1) ist mit einem Tragprofil (2) einer Tragvorrichtung (10) verbindbar und dient der Abstützung wenigstens einer Kabelführungsvorrichtung (31, 32), wie eines Kabelkanals, einer Kabelbahn, einer Kabelpritsche oder einer Gitterbahn, und umfasst einen Tragarm (11A; 11B), der mit einer Kopplungsvorrichtung (12) verbunden ist, mittels der der Ausleger (1) mit dem Tragprofil (2) verbindbar ist. Erfindungsgemäss sind zwei Tragarme (11A, 11B) vorgesehen, die je wenigstens in einer ersten oder zweiten Richtung ausgerichtet oder ausrichtbar durch ein Anschlussstück (113) gegebenenfalls lösbar mit der Kopplungsvorrichtung (12) verbunden sind, wobei die Anschlussstücke (113) gelenkig und um eine oder je um eine Gelenksachse gegeneinander drehbar oder in der gewählten Ausrichtung kraftschlüssig oder formschlüssig mit der Kopplungsvorrichtung (12) verbunden sind.

## Beschreibung

Die Erfindung betrifft einen Ausleger und eine Tragvorrichtung mit wenigstens einem solchen Ausleger.

Gattungsgemässe Tragvorrichtungen werden z.B. in der Installationstechnik für das Tragen von Kabelführungsvorrichtungen und damit gehaltene Medienleitungen, wie elektrische Leitungen, Wasserrohre, Stromschienen und dergleichen, verwendet.

Tragvorrichtungen für die Installation von Kabelführungsvorrichtungen, wie Kabelkanäle, Kabelbahnen, Kabelpritschen und Gitterbahnen, sind beispielsweise im Produktkatalog der LANZ OENSINGEN AG, Juli 2017, bekannt. Die Tragvorrichtungen umfassen üblicherweise mehrere Tragprofile, z.B. Deckenstützen, an denen je wenigstens ein Ausleger montiert ist. Mittels der Tragvorrichtungen werden beispielsweise elektrische Leitungen, Rohre, und Stromschienen installiert.

Im genannten Produktkatalog sind für entsprechend dimensionierte Kabelführungsvorrichtungen und maximal zulässige Belastungen die maximalen Stützabstände zwischen den Deckenstützen angegeben. Beispielsweise ist für eine Gitterbahn mit einer Breite von 30 cm ein maximaler Stützabstand von 1.5 m bei einer maximalen Belastung von 30 kg/m und ein maximaler Stützabstand von 2.5 m bei einer maximalen Belastung von 9 kg/m festgelegt. Bei einer Kabelbahn mit einer Breite von 50 cm ist ein maximaler Stützabstand von 1.5 m bei einer maximalen Belastung von 30 kg/m und ein maximaler Stützabstand von 2.5 m bei einer maximalen Belastung von 20 kg/m festgelegt.

In Abhängigkeit der aufzunehmenden Lasten ergibt sich unter Berücksichtigung der zulässigen maximalen Stützabstände der Deckenstützen daher ein entsprechender Installations- und Kostenaufwand.

Aufgrund der unterschiedlichen Breiten der Kabelführungsvorrichtungen sind zudem jeweils passende Ausleger vorzusehen, weshalb diese mit entsprechendem Aufwand mit der erforderlichen Sortimentsbreite und entsprechenden Kosten bereitgestellt werden müssen.

Zu beachten ist ferner, dass an einem Tragprofil oft mehrere Kabelführungsvorrichtungen, wie Kabelkanäle, Kabelbahnen, Kabelpritschen und Gitterbahnen, zu befestigen sind, sodass jeweils die passenden Ausleger zu beschaffen und zu montieren sind.

Aus der EP2846428A1 ist bekannt, dass zur Realisierung der erforderlichen Verkehrswege in einem Gebäude entsprechend gegeneinander ausgerichtete Kabelführungsvorrichtungen oft durch ein Winkelstück miteinander verbunden werden. Dieses Winkelstück wird unter Umständen durch einen Ausleger nur ungenügend gestützt, weshalb gegebenenfalls zwei Deckenstützen mit je einem Ausleger eingesetzt werden müssen.

Sofern mehreren Kabelführungsvorrichtungen zu montieren und gegebenenfalls durch Winkelstücke miteinander zu verbinden sind, stellt sich jeweils die Frage nach den passenden Auslegern und der Installationsdichte der Deckenstützen. Dieses Problem erhöht sich, wenn Kabelführungsvorrichtungen mit unterschiedlichen Abmessungen zu montieren sind und möglicherweise Änderungen der aufzunehmenden Last auftreten.

Der vorliegenden Erfindung liegt daher die Aufgabe zugrunde, eine verbesserten Ausleger und eine verbesserte Tragvorrichtung mit wenigstens einem solchen Ausleger zu schaffen.

Mit dem verbesserten Ausleger sollen Kabelführungsvorrichtungen, wie Kabelkanäle, Kabelbahnen, Kabelpritschen und Gitterbahnen, und auch durch Winkelstücke miteinander verbundene Kabelführungsvorrichtungen vorteilhaft abstützbar sein.

Mit erfindungsgemässen Auslegern sollen unterschiedlich dimensionierte Kabelführungsvorrichtungen vorteilhaft gehalten werden können.

Insbesondere sollen einzelne oder parallel zueinander geführte und gegebenenfalls durch eine Winkelstückmiteinander verbundene und beliebig ausgerichtete Kabelführungsvorrichtungen vorteilhaft gehalten werden können.

Mit nur einem Typ von Ausleger sollen beliebig dimensionierte Kabelführungsvorrichtungen gehalten werden können, sodass nur noch ein Ausleger erforderlich ist, der mit reduzierten Kosten und reduziertem Aufwand hergestellt, gelagert und installiert werden kann.

Bei Tragvorrichtungen mit erfindungsgemässen Auslegern sollen bei gegebener Last wesentlich höhere Stützabstände realisierbar sein. Kabelführungsvorrichtungen sollen auch bei erhöhten Lasten und/oder bei erhöhten Stützabständen zuverlässig und mit reduzierter Durchbiegung gehalten werden können.

Hinsichtlich der erhöhten Stützabstände, der einfacheren Installation unterschiedlicher Kabelführungsvorrichtungen, gegebenenfalls Kabelführungsvorrichtungen mit Winkelstücken, sollen Tragvorrichtungen einfacher, kostengünstiger und mit reduziertem Materialaufwand realisiert werden können.

Beim Betrieb der installierten Tragvorrichtungen mit installierten Medienleitungen sollen Schwingungen, die einerseits mechanische Verbindungen belasten und andererseits störende Geräusche verursachen können, vorzugsweise vermieden werden.

Die Ausleger sollen zudem mit beliebigen Tragprofilen, gegebenenfalls Deckenstützen oder Mauern, beliebig verbindbar sein und z.B. festgeschraubt und/oder formschlüssig verbunden werden können.

Bei erfindungsgemässen Tragvorrichtungen sollen auch Nachinstallationen, wie Änderungen oder Erweiterungen ohne zusätzlichen Aufwand einfach möglich sein. Beispielsweise sollen installierte Kabelführungsvorrichtungen durch grösser dimensionierte Kabelführungsvorrichtungen ersetzt werden können, ohne dass Änderungen der Tragvorrichtung erforderlich sind.

Diese Aufgabe wird mit einem Ausleger gemäss Anspruch 1 und einer Tragvorrichtung gemäss 12 gelöst. Vorteilhafte Ausgestaltungen der Erfindung sind in weiteren Ansprüchen angegeben.

Der Ausleger ist mit einem Tragprofil, gegebenenfalls einer Deckenstütze, einer Tragvorrichtung verbindbar und dient der Abstützung wenigstens einer Kabelführungsvorrichtung, wie eines Kabelkanals, einer Kabelbahn, einer Kabelpritsche oder einer Gitterbahn, und umfasst einen Tragarm, der mit einer Kopplungsvorrichtung verbunden ist, mittels der der Ausleger mit dem Tragprofil verbindbar ist.

Erfindungsgemäss sind zwei Tragarme vorgesehen, die je wenigstens in einer ersten oder zweiten Richtung ausgerichtet oder ausrichtbar durch ein Anschlussstück gegebenenfalls lösbar mit der Kopplungsvorrichtung verbunden sind, wobei die Anschlussstücke gelenkig und um eine oder je um eine Gelenksachse gegeneinander drehbar oder in der gewählten Ausrichtung kraftschlüssig oder formschlüssig mit der Kopplungsvorrichtung verbunden sind.

Erfindungsgemässe Ausleger und Tragvorrichtungen mit erfindungsgemässen Auslegern weisen zahlreiche Vorteile auf.

Mit dem erfindungsgemässen Ausleger sind beliebige und beliebig dimensionierte Kabelführungsvorrichtungen, wie Kabelkanäle, Kabelbahnen, Kabelpritschen und Gitterbahnen, und auch durch Winkelstücke miteinander verbundene Kabelführungsvorrichtungen vorteilhaft abstützbar. Durch Drehung der Tragarme oder durch entsprechende Verbindung der Tragarme können diese in einfacher Weise an die Breite der zu installierenden Kabelführungsvorrichtung angepasst werden.

Sofern die Tragarme drehbar sind, können beliebige Ausrichtung der Tragarm gewählt werden.

Sofern die Tragarme in wählbaren Ausrichtungen mit der Kopplungsvorrichtung verbindbar sind, so werden unter Berücksichtigung der wenigstens einen zu installierenden Kabelführungsvorrichtung die passenden Ausrichtungen der Tragarme gewählt und diese mit der Kopplungsvorrichtung verbunden. Vorzugsweise sind die Anschlussstücke der Tragarme in der gewählten Ausrichtung formschlüssig und/oder kraftschlüssig mit der Kopplungsvorrichtung verbunden, welche vorzugsweise entsprechend ausgerichtete Kopplungsarme aufweist.

Die Kopplungsarme sind in ihren Abmessungen vorzugsweise an die Querschnitte der Anschlussstücke angepasst, sodass eine stabile Steckverbindung zwischen den Tragarmen und der Kopplungsvorrichtung realisierbar ist und die Verbindung der Anschlussstücke mit den Kopplungsarmen nur noch durch Arretiermittel, wie Rastelemente oder Blockierelemente, z.B. Schrauben oder Bolzen, gesichert werden muss.

Mittels eines Auslegers können eine oder mehrere Kabelführungsvorrichtungen derart abgestützt werden, dass höhere Stützabstände zwischen den Tragprofilen realisierbar sind. Die Tragprofile können daher in grösseren Abständen an der Decke montiert werden, wodurch sich der Installationsaufwand für erfindungsgemässe Tragvorrichtungen entsprechend reduziert. Der zusätzliche Materialaufwand für den zweiarmigen Ausleger wird durch die Reduktion der Anzahl der Tragprofile bzw. Deckenstützen zumindest teilweise kompensiert. Zu beachten ist hingegen, dass der Installationsaufwand, der ein wesentlicher Kostenfaktor ist, zusätzlich reduziert werden kann, weshalb sich insgesamt ein deutlich reduzierter Aufwand ergibt. Weiter ist zu beachten, dass durch die Reduktion von Tragprofilen und die entsprechende Erhöhung der Stützabstände ein ästhetisch vorteilhaftes Erscheinungsbild der Tragvorrichtungen resultiert.

Durch erfindungsgemässe Ausleger können beliebig dimensionierte, parallel oder geneigt zueinander geführte und gegebenenfalls durch eine Winkelstück miteinander verbundene Kabelführungsvorrichtungen vorteilhaft gehalten werden. Die Kabelführungsvorrichtung bzw. das Winkelstück kann in einem Kurvenbereich durch einen einzigen Ausleger vorteilhaft gestützt werden. Auf die Installation von zwei Tragprofilen kann verzichtet werden.

Da mit einem Ausleger beliebig dimensionierte Kabelführungsvorrichtungen gehalten werden können, kann nur noch ein Auslegertyp mit entsprechend reduzierten Kosten hergestellt, beschafft, gelagert und installiert werden.

Hinsichtlich der erhöhten Stützabstände, der einfacheren Installation unterschiedlicher Kabelführungsvorrichtungen, gegebenenfalls Kabelführungsvorrichtungen mit Winkelstücken, können Tragvorrichtungen mit mehreren Tragprofilen, gegebenenfalls Deckenstützen, und einem oder mehreren Auslegern pro Tragprofil, einfacher, kostengünstiger und mit reduziertem Materialaufwand realisiert werden können.

Da sich die Tragarme längs oder diagonal zu den Kabelführungsvorrichtungen erstrecken, werden mechanische Schwingungen vorteilhaft absorbiert, weshalb Belastungen mechanischer Verbindungen und störende Geräusche reduziert werden. Im vorzugsweisen Ausgestaltungen werden die Tragarme mit elastischen Elementen versehen, an denen die aufgelegte Kabelführungsvorrichtung anliegen kann. Durch die elastischen Elemente erfolgt ein Ausgleich der Last über den gesamten Tragarm und eine weitere Absorption von Schwingungen.

Die Ausleger können beliebig mit beliebigen Tragprofilen, gegebenenfalls Deckenstützen oder Mauern, verbunden, z.B. festgeschraubt und/oder formschlüssig eingehängt werden.

Nachinstallationen können normalerweise mit geringem Aufwand erfolgen, indem z.B. eine nicht mehr genügend gross dimensionierte Kabelführungsvorrichtung durch eine grössere Kabelführungsvorrichtung ersetzt wird. Dabei genügt es, die Winkel der Tragarme an die neue Breite der Kabelführungsvorrichtung anzupassen.

Die Kopplungsvorrichtung umfasst vorzugsweise ein Montageteil, welches eine Kopplungswelle hält, die mit den Anschlussstücken der beiden Tragarme verbunden ist. In diesem Fall sind die Anschlussstücke der Tragarme derart auszugestalten, dass sie ineinander verschiebbar und koaxial zueinander ausrichtbar sind, sodass sie von der Kopplungswelle durchstossen werden können. Beispielsweise umfassen die Anschlussstücke der Tragarme entlang der Gelenkachse gegeneinander versetzte hülsenförmige Scharnierelemente, die ineinander verschoben und von der Kopplungswelle durchstossen werden.

Alternativ umfasst die Kopplungsvorrichtung ein Montageteil, das zwei Kopplungswellen hält, von denen jede mit einem der Anschlussstücke eines der beiden Tragarme verbunden ist. In diesem Falle können die Tragarme identisch ausgestaltet und je mit nur einem hülsenförmigen Scharnierelement versehen sein.

Vorzugsweise wird vorgesehen, dass die Tragarme nach der Installation des Auslegers automatisch auseinandergedreht werden. Dies kann durch wenigstens ein elastisches Element, wie eine Feder, bewirkt werden.

Wie bereits erwähnt, kann die Kopplungsvorrichtung auch zur formschlüssigen und/oder kraftschlüssigen Verbindung mit in unterschiedlichen Richtungen ausgerichteten Tragarmen ausgebildet sein.

Die Anschlussstücke sind vorzugsweise einstückig an den Tragarmen angeformt. In alternativen Ausgestaltungen sind die Anschlussstücke formschlüssig und/oder kraftschlüssig mit den Tragarmen verbunden.

Die Tragarme, die vorzugsweise gleiche Längen aufweisen, definieren nach der Installation des Auslegers ein Dreieck mit entsprechenden Stützpunkten und/oder Stützlinien bzw. linienförmige Stützelementen, welche die Schenkel des Dreiecks bilden.

Die Länge der Tragarme wird vorzugsweise entsprechend der maximalen Breite von z.B. 600 mm der zu installierenden Kabelführungsvorrichtungen gewählt. Vorzugsweise wird vorgesehen, dass die Länge der Tragarme wenigstens um den Faktor 1.5 grösser gewählt ist als die maximale Breite der Kabelführungsvorrichtungen. Vorzugsweise liegt dieser Faktor in einem Bereich von 1.5 - 3. Die Tragarme sind daher vorzugsweise in einem Winkel von +/- 23° - 66° +/- x° ausrichtbar, wobei der Winkel x, der beispielsweise in einem Bereich von 0° - 22° liegt, eine Anpassung an die jeweils vorliegende Breite der Kabelführungsvorrichtung erlaubt. Die Tragarme sind z.B. um einen Winkel im Bereich von 23° - 66°, gegebenenfalls in einem Bereich von 35° bis 55° gegenüber der Querachse der installierten Kabelführungsvorrichtung ausrichtbar. Für Kabelführungsvorrichtungen mittlerer Breite liessen die Tragarme vorzugsweise einen Neigungswinkel von +/- 45° auf.

Durch die Tragarme und gegebenenfalls die Kopplungsvorrichtung können verschiedene Stützpunkte und/oder Stützlinien gebildet werden.

Beispielsweise werden die Stützpunkte und/oder Stützlinien, auf die wenigstens eine Kabelführungsvorrichtung aufsetzbar ist,
a) durch die Auflagestücke der auseinander gedrehten Tragarme; und/oder
b) durch die Endstücke und die Anschlussstücke der auseinander gedrehten Tragarme; und/oder
c) durch die auseinander gedrehten Tragarme und wenigstens ein Teil der Kopplungsvorrichtung, gegebenenfalls der Kopplungswelle, gebildet.

Vorzugsweise sind die Endstücke und/oder die Anschlussstücke der Tragarme und/oder die Kopplungsvorrichtung mit Halteelementen versehen, die dem Halten der aufgesetzten Kabelführungsvorrichtung dienen.

Zusätzlich zu den Stützelementen sind daher vorzugsweise Halteelemente vorgesehen, mittels denen die durch den Ausleger abgestützte Kabelführungsvorrichtung oder die durch den Ausleger abgestützten Kabelführungsvorrichtungen seitlich unverschiebbar gehalten werden. In vorzugsweisen Ausgestaltungen können die Stützelemente gleichzeitig die Halteelemente bilden. Beispielsweise wird eine Kabelführungsvorrichtung durch ein Stützelement abgestützt, welches in den Boden der Kabelführungsvorrichtung eingreift und diese stützt und auch gegen seitliches Verschieben sichert.

Vorzugsweise liegen die Halteelemente seitlich an der Kabelführungsvorrichtung an oder greifen je in eine Öffnung der Kabelführungsvorrichtung ein. Vorzugsweise weisen die Kabelführungsvorrichtungen einen gelochten, gegebenenfalls mit Längsschlitzen versehenen Boden auf, in die die Halteelemente eingreifen können.

Die Halteelemente sind vorzugsweise an den Tragarmen angeformt, gegebenenfalls daraus ausgeschnitten und umgebogen oder in den Tragarmen fest oder verschiebbar gehalten. Vorzugsweise sind die verschiebbar gelagerten Halteelemente federelastisch, z.B. durch wenigstens ein Federelement gestützt.

Vorzugsweise ist wenigstens eines der Halteelemente verschiebbar und/oder gegebenenfalls arretierbar gelagert oder/oder federelastisch gehalten, sodass eine Anpassung der Halteelemente an die Breite der Kabelführungsvorrichtung möglich ist diese vorzugsweise spielfrei gehalten ist.

Die Tragarme weisen vorzugsweise ein L-Profil mit einem daran anschliessenden Seitenstück, ein T-Profil mit einem horizontal ausgerichteten Kopfstück oder ein I-Profil mit einem Auflagestück oder ein nach oben, nach unten oder zur Seite gerichtetes U-Profil mit einem Auflagestück auf. Das Auflagestück, auf dem die Kabelführungsvorrichtung aufliegt, ist vorzugsweise mit runden, polygonalen oder längsgestreckten Öffnungen versehen, in die Verbindungselemente einführbar sind. In vorzugsweisen Ausgestaltungen können auch weitere Elemente der Tragarme mit Öffnungen versehen sein, welche es beispielsweise ermöglichen, die beiden Tragarme miteinander zu koppeln.

Die gelenkig mit der Kopplungsvorrichtung verbundenen und von der Kopplungswelle gehaltenen Tragarme sind vorzugsweise derart zwischen Endanschlägen gegeneinander drehbar, dass sie einen Winkel einschliessen können, der in einem Bereich von 0° - 270° liegt. Kleinere Drehwinkel können selbstverständlich mit minimalem Aufwand vorgesehen werden. Um grössere Drehwinkel zu erreichen, wird die Kopplungswelle vorzugsweise weiter beabstandet vom Tragprofil gehalten. Sofern zwei Kopplungswellen vorgesehen sind, sind diese seitlich gegeneinander versetzt, weshalb die Drehung der Tragarme vom Montageteil der Kopplungsvorrichtung oder vom Tragprofil kaum behindert wird. Sofern die Kopplungswellen seitlich genügend gegeneinander versetzt sind, können die Tragarme je um 180° nach vorne und nach hinten und zusätzlich in den Bereich des anderen Auslegers gedreht werden.

Die Tragarme sind vorzugsweise lösbar mit der Kopplungsvorrichtung verbunden. Die Kopplungsvorrichtung kann im vorzugsweisen Ausgestaltungen zudem in das Tragprofil integriert werden. In diesem Falle sind lediglich Scharnierelemente, die zur Aufnahme einer Kopplungswelle oder zur Aufnahme von zwei Kopplungswellen geeignet sind, in das Tragprofil zu integrieren. Weiterhin kann das Tragprofil auch mit Kopplungsarmen versehen sein, welche es erlauben, wenigstens zwei Tragarme wahlweise ausgerichtet zu montieren.

Die Tragvorrichtung umfasst wenigstens ein Tragprofil, wie einen Metallkörper, gegebenenfalls eine Deckenstütze, oder einen Mauerkörper, an dem wenigstens ein erfindungsgemässer Ausleger montiert ist.

Die Tragarme des wenigstens einen Auslegers stützen eine Kabelführungsvorrichtung oder je eine Kabelführungsvorrichtung, wie einen Kabelkanal, eine Kabelbahn, eine Kabelpritsche oder eine Gitterbahn, die parallel zueinander oder geneigt zueinander ausgerichtet und gegebenenfalls durch eine Winkelstück miteinander verbunden sind.

In bevorzugten Ausgestaltungen werden die Tragprofile oder Deckenstützen derart montiert, dass sie alternierend auf der einen Seite und der anderen Seite einer zugeordneten Kabelführungsvorrichtung angeordnet sind. Auf diese Weise stützen die einander zugewandten Endstücke der Tragarme die installierte Kabelführungsvorrichtung jeweils beidseitig ab, sodass Torsionskräfte, die auf die Kabelführungsvorrichtung einwirken könnten, weitgehend vermieden werden.

Der Stützabstand zwischen zwei Tragprofilen kann bei erfindungsgemässen Tragvorrichtungen wesentlich erhöht werden. Der Stützabstand zwischen zwei benachbarten Tragprofilen kann entsprechend der Summe der Abschnitte der Kabelführungsvorrichtung, die von den Tragarmen gestützt sind, und einem Auslegerabstand zwischen den Endstücken der einander zugewandten Tragarmen der Ausleger gewählt werden, der entsprechend der Festigkeit der aufzunehmenden Kabelführungsvorrichtung und der zu tragenden Last festgelegt wird. Der Auslegerabstand entspricht vorzugsweise etwa dem Stützabstand konventioneller Tragvorrichtungen.

Nachfolgend wird die Erfindung anhand von Zeichnungen näher erläutert. Dabei zeigt:
- Fig. 1: eine erfindungsgemässe Tragvorrichtung 10 in einer vorzugsweisen Ausgestaltung, mit einem Tragprofil 2 in der Ausgestaltung einer Deckenstütze und zwei daran befestigten erfindungsgemässen Auslegern 1A, 1B, die je zwei Tragarme 11A, 11B umfassen, auf denen Kabelführungsvorrichtungen bzw. Kabelkanäle 31, 32 abgelegt sind, die unterschiedlichen Breiten aufweisen;
- Fig. 2: die Tragvorrichtung 10 von Fig. 1 ohne die Kabelkanäle 31, 32;
- Fig. 3: einen Teil der Tragvorrichtung 10 von Fig. 2 mit einem vorzugsweise ausgestalteten Ausleger 1 mit zwei Tragarmen 11A, 11B, deren einander zugewandte Anschlussstücke 113 ineinander eingreifen und von einer Kopplungswelle 121 einer Kopplungsvorrichtung 12 gehalten sind, die durch Verbindungsmittel mit einem Tragprofil bzw. einer Deckenstütze 2 verbunden ist;
- Fig. 4a: die Kopplungsvorrichtung 12 von Fig. 3 ohne die Tragarme 11A, 11B mit einem Montageteil 122, das die Kopplungswelle 121 hält und das eine Montageöffnung 120 aufweist, aus der beispielsweise ein Haken ausgeschnitten ist oder durch die beispielsweise ein Montageelement, wie eine Montageschraube hindurch führbar ist;
- Fig. 4b: die Kopplungsvorrichtung 12 von Fig. 4a mit einem Montageteil 122, welches zwei Kopplungswellen 121A, 121B hält, von denen jede der Verbindung mit einem Tragarm 11A; 11B dient;
- Fig. 5: einen Ausleger 1 mit einer Kopplungsvorrichtung 12 mit mehreren Kopplungsarmen 128, an denen die beiden Tragarme 1A, 1B in gewählten Ausrichtungen ankoppelbar sind;
- Fig. 6: die Tragvorrichtung 10 von Fig. 1 mit dem unteren Ausleger 1A, der nur eine Kabelkanal 32 trägt, und dem oberen Ausleger 1B, der zwei parallel zueinander ausgerichtete Kabelkanäle 31, 32 trägt, die unterschiedliche Breiten aufweisen; und
- Fig. 7: zwei zu einer einzigen Tragvorrichtung 10 zusammengefügte Tragvorrichtungen 10 gemäss Fig. 6.

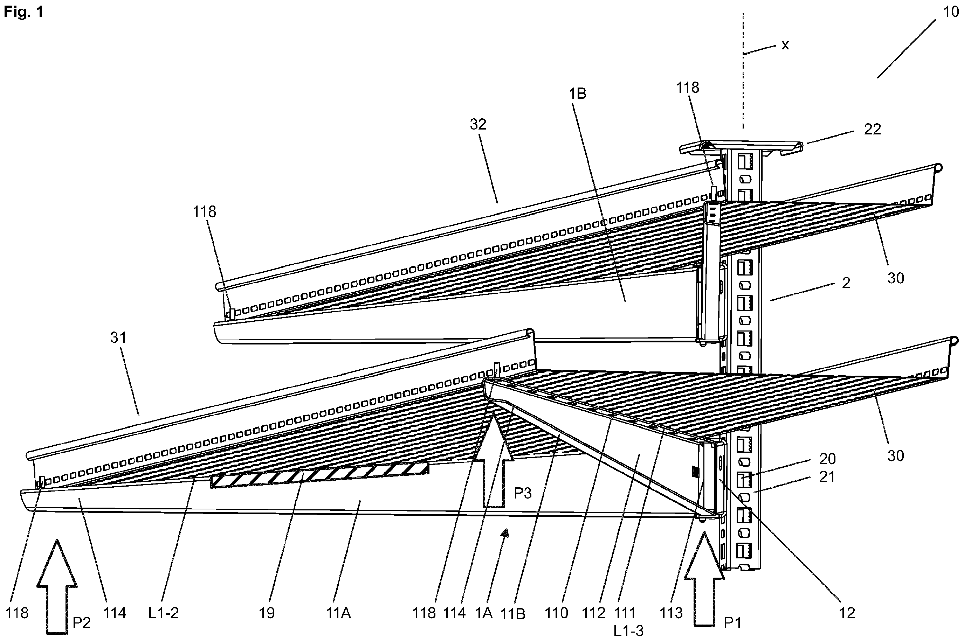

Fig. 1 zeigt eine vorzugsweise ausgestaltete erfindungsgemässe Tragvorrichtung 10, die ein entlang einer Montageachse x ausgerichtetes Tragprofil 2 bzw. eine Deckenstütze und zwei daran befestigte erfindungsgemässe Ausleger 1A, 1B aufweist. Die beiden Ausleger 1A, 1B umfassen je zwei Tragarme 11A, 11B, die je mit einem Anschlussstück 113 gelenkig mit einer Kopplungsvorrichtung 12 verbunden und um eine Gelenksachse gegeneinander drehbar sind. Die Kopplungsvorrichtung 12 ist mit der Deckenstütze 2 verschraubt und/oder formschlüssig verbunden. Die Tragarme 11A, 11B, die vorzugsweise senkrecht zur Montageachse x ausgerichtet sind, weisen je ein von der Kopplungsvorrichtung 12 entferntes distales Endstück 114 und das der Kopplungsvorrichtung 12 zugewandte proximale Anschlussstück 113 auf.

Die Tragarme 11A, 11B weisen ein U-Profil mit einem Auflagestück 111 und einem daran anschliessenden Seitenstück 112 auf, welches an der Unterseite ein weiteres Mal gebogen ist. Das Auflagestück 111 ist vorzugsweise mit runden, polygonalen oder längsgestreckten Öffnungen 110 versehen, durch die hindurch beispielsweise ein Fixierelement, wie ein Zapfen oder eine Schlaufe, geführt werden kann, um die aufgesetzte Kabelführungsvorrichtung zu fixieren. Die beiden Tragarme 11A, 11B können identisch ausgebildet und/oder formschlüssig ineinander verschiebbar sein. Ausleger 1, die formschlüssig ineinander verschiebbar sind können raumsparend gelagert und transportiert werden.

Auf dem unteren Ausleger 1A ist ein breiterer erster Kabelkanal 31 abgelegt und auf dem oberen Ausleger 1B ist ein weniger breiter zweiter Kabelkanal 32 abgelegt. Zur Anpassung an die unterschiedlichen Breiten wurden die Tragarme 11A, 11B entsprechend gegeneinander bzw. auseinandergedreht. Da der erste Kabelkanal 31 breiter ist als der zweite Kabelkanal 32 sind die Tragarme 11A, 11B des ersten Auslegers 1A weniger weit auseinander gedreht als die Tragarme 11A, 11B des zweiten Auslegers 1B. Obwohl die beiden Ausleger 1A, 1B identisch ausgebildet sind, können somit unterschiedlich dimensionierte Kabelkanäle 31, 32 auf die Tragarme 11A, 11B abgelegt werden.

Im Bereich des Endstücks 114 und des Anschlussstück 113 weisen die Tragarme 11A, 11B vorzugsweise je ein Halteelement 118 auf. Durch die Halteelemente 118 werden die aufgelegten Kabelbahnen 31, 32 seitlich gehalten.

Die Kabelkanäle 31, 32 weisen gelochte Bodenplatten auf. Die Halteelemente 118 können somit auch für den Eingriff in die z.B. runden, polygonalen oder längsgestreckten Öffnungen der Bodenplatte vorgesehen sein.

Es ist symbolisch gezeigt, dass die Kabelkanäle 31, 32 an wenigstens drei Stützpunkten P1, P2, P3 abgestützt sind. Die Tragarme 11A, 11B spannen somit ein Dreieck auf, auf dem die Kabelbahnen 31, 32 stabil gehalten sind. Das Auflagestück 111 kann zumindest teilweise auf der Höhe der Stützpunkte P1, P2, P3 liegen, sodass zwischen den Stützpunkten P1, P2, P3 Stützlinien L1-2, L1-3 gebildet werden.

Zumindest teilweise entlang dem Auflagestück 111 ist vorzugsweise ein elastisches Element 19 vorgesehen, welches eine stabile Verbindung mit dem Boden der Kabelbahn 32 sicherstellt und Schwingungen absorbiert.

Die vom Anschlussstück 113 abgewandten, distalen Stützpunkte P2, P3 werden beispielsweise durch die Endstücke 113 der Tragarme 11A, 11B und/oder durch die aufgesetzten Halteelemente 118 gebildet, die vorzugsweise formschlüssig mit den Kabelbahnen 31, 32 zusammenwirken. Der dem Anschlussstück 113 zugeordnete Stützpunkt P1 wird beispielsweise durch das Anschlussstück 113 und/oder ein mit dem Anschlussstück 113 verbundenes Halteelement 118 und/oder von der Kopplungsvorrichtung 12, gegebenenfalls einer von der Kopplungsvorrichtung 12 gehaltenen Kopplungswelle 121 gebildet.

Das Tragprofil 2 ist als Deckenstütze ausgestaltet und umfasst ein Mehrkantprofil, das mit Lochungen 20 versehen und mit einer Montageplatte 22 verbunden ist. Das Tragprofil 2 ist durch die Montageplatte 22 mit der Decke verbindbar oder verbunden. Erfindungsgemässe Ausleger 1A, 1B können hingegen z.B. auch an einer Wand oder einem Metallträger montiert werden.

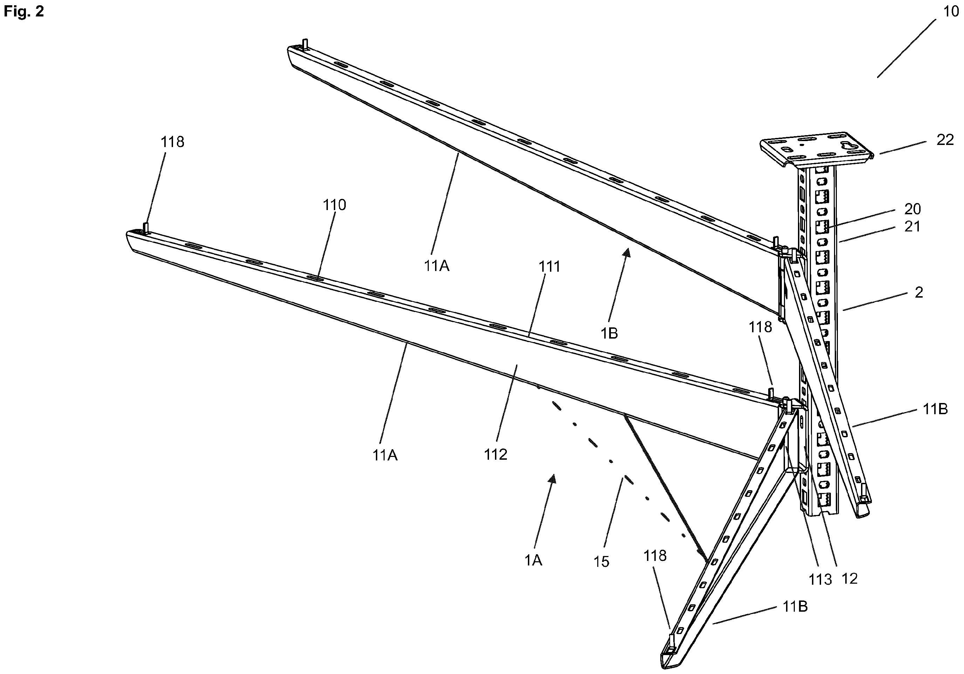

Fig. 2 zeigt die Tragvorrichtung 10 von Fig. 1 ohne die Kabelkanäle 31, 32. Die Positionen der Tragarme 11A, 11B der beiden Ausleger 1A, 1B sind unverändert. Beim unteren Ausleger 1A ist ein optional vorgesehenes Kopplungsteil 15, beispielsweise eine Kopplungsstange, gezeigt, mittels der die beiden Tragarme 11A, 11B in einer gewählten Drehlage gegeneinander fixierbar sind. Die Kopplungsstange 15 kann beispielsweise in passende Öffnungen in den Tragarmen 11A, 11B eingehängt werden.

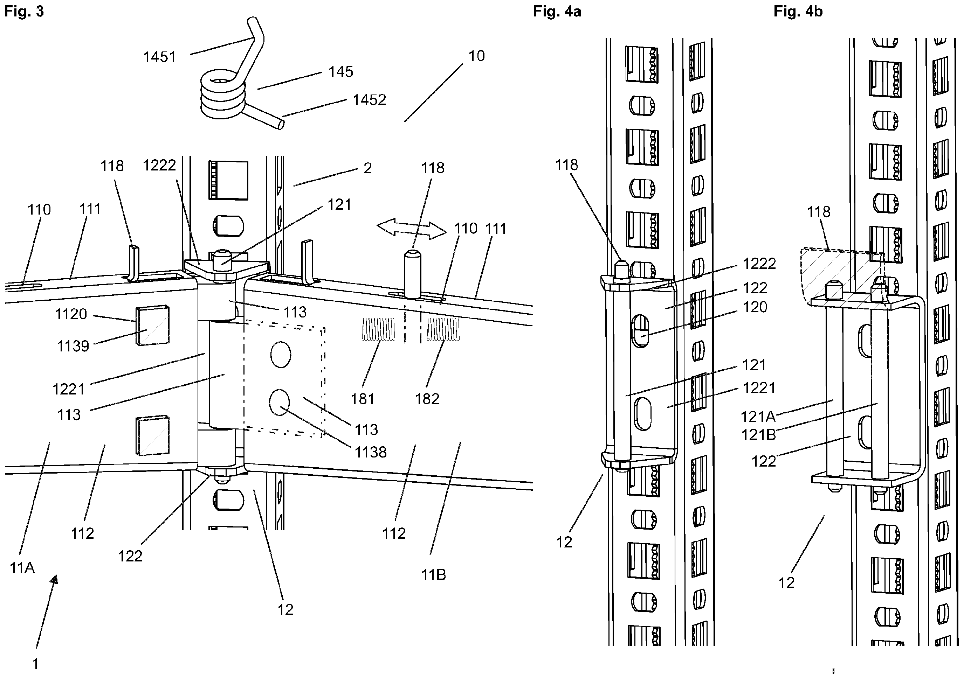

Fig. 3 zeigt einen Teil der Tragvorrichtung 10 von Fig. 2 mit einem vorzugsweise ausgestalteten erfindungsgemässen Ausleger 1 mit zwei Tragarmen 11A, 11B, die gelenkig mit einer Kopplungsvorrichtung 12 verbunden sind. Die Kopplungsvorrichtung 12 umfasst ein U-Profil-förmiges Montageteil 122 mit einem Mittelstück 1221 und zwei beidseits daran angeformten oder davon abgebogenen Halteflanschen 1222 (siehe auch Fig. 4a). Das Mittelstück 1221 ist mit der Deckenstütze 2 verbunden. Die beiden Halteflanschen 1222 halten eine Kopplungswelle 121, welche die ineinander verschobenen Anschlussstücke 113 der beiden Tragarme 11A, 11B hält.

Die Anschlussstücke 113 weisen Scharnierelemente auf, die hülsenförmig oder hohlzylinderförmig ausgebildet sind oder die im Wesentlichen einen Aufnahmekanal für die Aufnahme der Kopplungswelle 121 aufweisen. In dieser Ausgestaltung sind die Scharnierelemente bezüglich des Aufnahmekanals koaxial zueinander ausgerichtet. Das Anschlussstück 113 des ersten Tragarms 1A weist zwei Scharnierelemente auf, zwischen denen ein Scharnierelement des Anschlussstücks 113 des zweiten Tragarms 1B gehalten ist. Die Anzahl der Scharnierelemente kann beliebig gewählt werden.

Die Anschlussstücke 113 sind vorzugsweise einstückig mit den Tragarmen 11A, 11B verbunden oder daran angeformt oder angeschweisst. In Fig. 3 ist illustriert, dass die Seitenwand 112 ein zu einer Schlaufe geformtes Endstück aufweist, das mittels mechanischen Verbindungen, wie Tox-Verbindungen, fixiert ist.

Alternativ kann das Anschlussstück 113 in den Tragarm 11A eingeschoben und durch eine kraftschlüssige oder formschlüssige Verbindung, gegebenenfalls eine Schweissverbindung, fixiert werden. Vorzugsweise wird das Anschlussstück 113 unter Druck in den Tragarm 11A eingepresst, sodass wenigstens ein Rastelement 1139, wie ein Rastblock, in eine Öffnung 1120 vorzugsweise in der Seitenwand 112 des Tragarms 11A einrasten kann. Das Anschlussstück 113 ist daher vorzugsweise innerhalb eines Anschlussprofils des Tragarms 11A festgeklemmt und mittels Rastelementen 1139 innerhalb des Tragarms 11A praktisch unlösbar verankert.

Weiterhin ist ein Federelement 145 gezeigt, das die Kopplungswelle 121 vorzugsweise umschliesst und mit einem Endstück 1451 auf den ersten Tragarm 11A und mit einem zweiten Endstück 1452 auf den zweiten Tragarm 11B derart einwirken kann, dass die Tragarme 11A, 11B auseinander gedreht werden. Beispielsweise werden die Tragarme 11A, 11B bei der Auslieferung durch eine Klammer zusammengehalten und nach Lösen der Klammer durch das Federelement 145 automatisch auseinandergedreht.

Fig. 3 zeigt exemplarisch, dass ein Halteelement 118 des ersten Tragarms 11A aus dem Auflagestück 111 ausgeschnitten und nach oben gedreht wurde. Beim zweiten Tragarm 11B ist ein Halteelement 118 in eine Öffnung 110 im Auflagestück 111 eingesetzt. Vorzugsweise ist das Halteelement 118 innerhalb der Öffnung 110 verschiebbar gehalten und gegebenenfalls durch Federelemente 181, 182 beidseits elastisch gestützt. Die Verwendung verschiebbarer Halteelemente 118 ist insbesondere dann vorteilhaft, wenn die Halteelemente 118 zum Eingriff in Öffnungen im Boden der Kabelführungsvorrichtungen 31, 32 vorgesehen sind. In den gezeigten Kabelführungsvorrichtungen 31, 32 sind parallel zur Kanalachse verlaufende Längsschlitze vorgesehen.

Fig. 4a zeigt die Kopplungsvorrichtung 12 von Fig. 3 ohne die Tragarme 11A, 11B mit einem Montageteil 122, das die Kopplungswelle 121 hält. Das Montageteil 122 weist wenigstens eine Montageöffnung 120 auf, aus der beispielsweise ein Haken ausgeschnitten und ausgebogen ist oder durch die beispielsweise ein Montageelement, wie eine Montageschraube hindurch führbar ist, um die Kopplungsvorrichtung 12 am Tragprofil 2 zu befestigen.

Fig. 4b zeigt die Kopplungsvorrichtung 12 von Fig. 4a mit einem Montageteil 122, welches zwei Kopplungswellen 121A, 121B hält, von denen jede der Verbindung mit einem Tragarm 11A; 11B dient.

Bei Verwendung dieser Kopplungsvorrichtung 12 können identische Tragarme 11A, 11B bzw. Tragarme 11A, 11B mit identischen Anschlussstücken 113 je mit einer der Kopplungswellen 121A, 121B verbunden werden.

Die oberen Endstücke der Kopplungswellen 121A, 121B können einen Anschlag für die aufgelegte Kabelbahn 31, 32 bilden. Wie dies in Fig. 4b gezeigt ist, kann die Kopplungsvorrichtung 12 auch ein Halteelement 118 aufweisen, welches als Anschlag dient. Strichpunktiert und schraffiert ist gezeigt, dass der obere Schenkel des Montageteils 122 verlängert und nach oben gebogen ist und dadurch ein Halteelement 118 und einen seitlichen Ausschlag für eine auf den Ausleger 1 aufgelegte Kabelführungsvorrichtung 31, 32 bildet.

Die Kopplungswellen 121, 121A, 121B können vorzugsweise axial nach oben aus den Montageteilen 122 herausgezogen werden, um das Anschlussstück 113 eines Tragarms 1 in das Montageteil 122 einzuführen und anschliessend durch Einsetzen der Kopplungswelle(n) 121A, 121B zu fixieren. Die Kopplungswelle 121 von Fig. 4a und die Kopplungswellen 121A, 121B von Fig. 4b sind daher vorzugsweise lösbar und vorzugsweise mittels eines Sicherungselements, wie eines Sicherungsrings oder einer Sicherungsnadel, arretierbar.

Fig. 4a zeigt ferner, dass das obere Endstück der Kopplungswelle 121 als Halteelement 118 ausgebildet ist. Die Oberseite des Montageteils 122 und/oder die Kopplungswelle 121 können daher ebenfalls als Halteelemente 118 und/oder Stützelemente dienen.

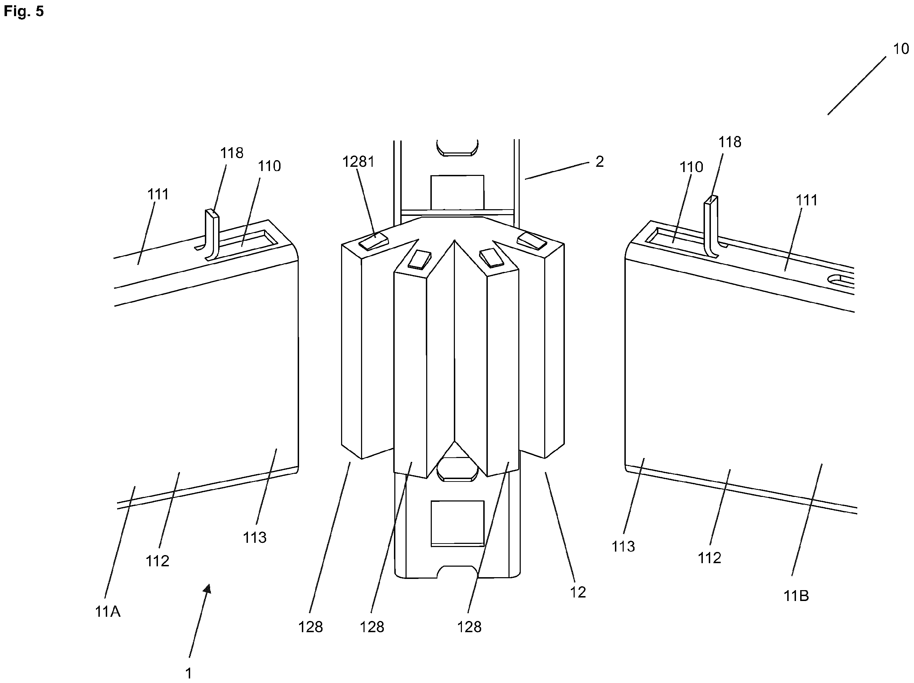

Fig. 5 zeigt einen erfindungsgemässen Ausleger 1 mit einer Kopplungsvorrichtung 12, an die die beiden Tragarme 1A, 1B in gewählten Ausrichtungen ankoppelbar sind. Schematisch ist gezeigt, dass die Kopplungsvorrichtung 12 mehrere Kopplungsarme 128 aufweist, die an die Anschlussstücke 113 der Tragarme 1A, 1B angepasst und in unterschiedliche Richtungen ausgerichtet sind. Durch Aufstecken der Kopplungsarme 1A, 1B an die passenden Kopplungsarme 128 wird vorzugsweise eine formschlüssige Verbindung erstellt. Ein Kopplungselement 1281 des gewählten Kopplungsarms 128 rastet in eine Öffnung 110 im Anschlussstück 113 ein und hält den Tragarm 1A; 1B durch die formschlüssige Verbindung. Vorzugsweise sind die Kopplungsarme 128 derart ausgebildet, dass die aufgesteckten Anschlussstücke 113 spielfrei gehalten werden.

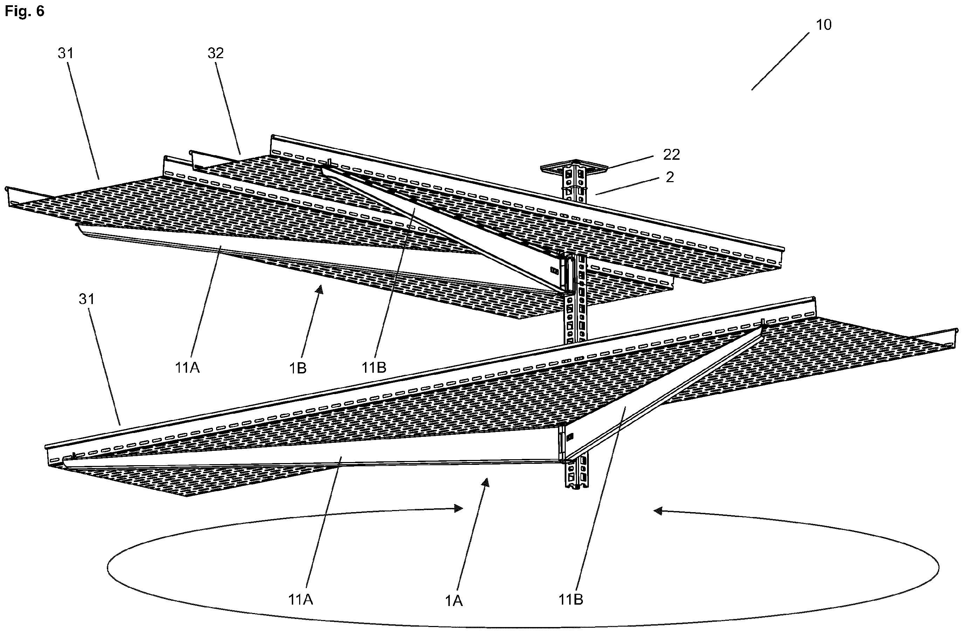

Fig. 6 zeigt die Tragvorrichtung 10 von Fig. 1 mit dem unteren Ausleger 1A, der nur einen Kabelkanal 32 trägt, und dem oberen Ausleger 1B, der zwei parallel zueinander ausgerichtete Kabelkanäle 31, 32 trägt, die zudem unterschiedliche Breiten aufweisen. Jeder Ausleger 1A, 1B kann mit einem Handgriff durch entsprechende Drehung der Tragarme 11A, 11B für die Aufnahme von einem oder zwei Kabelführungsvorrichtungen 31, 32 bereitgestellt werden, die unterschiedlich konfiguriert und praktisch beliebig ausgerichtet und gegebenenfalls durch ein Winkelstück miteinander verbunden sind.

Der untere Ausleger 1A hält nur eine Kabelbahn 31.der obere Ausleger 1B hält zwei Kabelbahnen 31, 32 unterschiedlicher Breite. Durch entsprechende Drehung der Tragarme 11A, 11B des unteren Auslegers 1A z.B. in die Position der Tragarme 11A, 11B des oberen Auslegers 1B kann dieser in einfacher Weise zur Aufnahme von zwei parallel zueinander verlaufenden Kabelbahnen 31, 31; 31, 32 oder 32, 32 umgestellt werden.

Mit einem fast in sich geschlossenen Kreis ist symbolisiert, dass die Tragarm 11A, 11B in einem weiten Winkel von bis zu 270° gegeneinander gedreht werden können. Sofern die Kopplungswelle 121 beabstandet vom Tragprofil 2 gehalten wird, ist ein fast beliebig grosser Drehwinkel realisierbar. Sofern eine Kopplungsvorrichtung 12 mit zwei entsprechend voneinander beanstandeten Kopplungswellen 121A, 121B vorgesehen ist, können die Tragarme 11A, 11B nach vorn und nach hinten vollständig gegeneinander geführt werden.

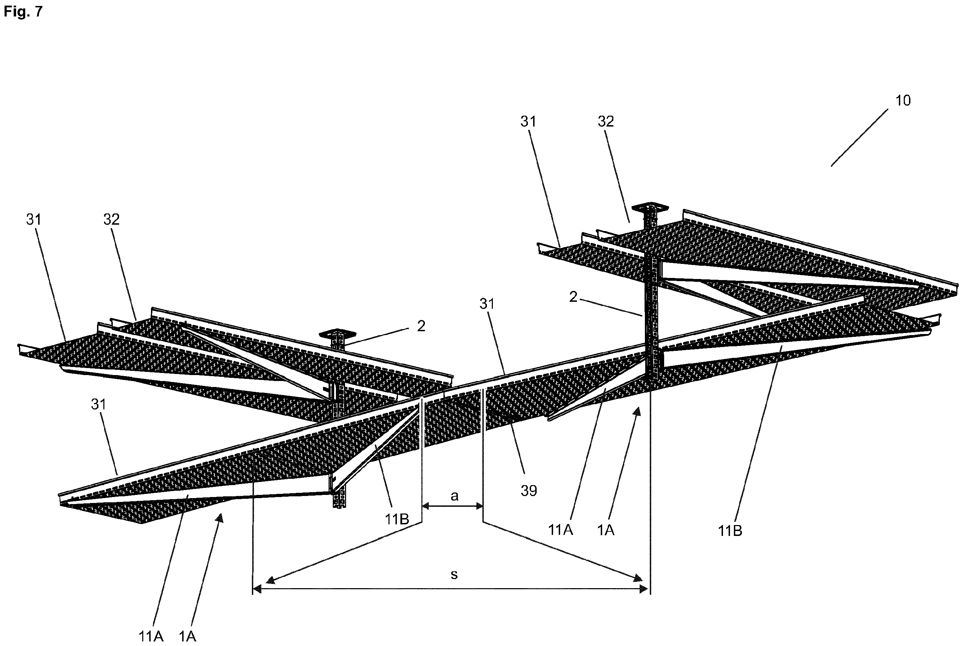

Fig. 7 zeigt zwei zu einer einzigen Tragvorrichtung 10 zusammengefügte Tragvorrichtungen 10 gemäss Fig. 6. Es ist gezeigt, dass die Tragarme 11A, 11B der unteren Ausleger 1A eine Kabelbahn 31 stützen, die zwei durch eine Verbindungsvorrichtung 39 miteinander verbundene Kabelbahnsegmente aufweist. Die einander zugewandten Endstücke der Tragarme 11A, 11B reichen fast bis zur Verbindungsvorrichtung 39 und sind nur durch einen geringen Auslegerabstand a voneinander getrennt. Eingezeichnet ist ferner der Stützabstand s zwischen den Tragprofilen bzw. Deckenstützen 2.

Der eingezeichnete Stützabstand s ist unter Berücksichtigung des gewählten Kabelkanals 31 und der maximal zu tragenden Last für konventionelle Ausleger berechnet, die ausgehend von der zugehörigen Deckenstütze 2 senkrecht zur Kabelbahn 31 ausgerichtet sind. Der Auslegerabstand a kann daher auf den berechneten Stützabstand s erhöht werden, wie dies in Fig. 7 symbolisch gezeigt ist.

Der Stützabstand s zwischen den beiden benachbarten Deckenstützen 2 kann daher entsprechend der Summe der Abschnitte der Kabelbahn 31, die von den Tragarmen 11A, 11B gestützt sind, und einem Auslegerabstand a zwischen den Endstücken der einander zugewandten Tragarmen 11A, 11B gewählt werden, der, wie bei konventionellen Tragvorrichtungen (siehe den Produktkatalog der LANZ OENSINGEN AG, Juli 2017), entsprechend der Festigkeit der Kabelbahn 31 und der Höhe der zu tragenden Last festgelegt wird.

Zu beachten ist ferner, dass die einander zugewandten Endstücke der Tragarme 11A, 11B die Kabelbahn 31 je auf einer Seite stützen, weshalb die Kabelbahn 31 beidseitig gestützt ist und Torsionskräfte kaum auftreten. Dies wird erreicht, indem die Tragprofile 2 alternierend auf der einen Seite und der anderen Seite der Kabelbahn 31 angeordnet sind. Durch diese Anordnung der Deckenstützen 2 gelingt es, die Kabelbahn 31 optimal, d.h. beidseitig zu stützen und maximale Auslegerabstände a und maximale Stützabstände s zu erzielen.

## Patentansprüche

1. Ausleger (1) zur Verbindung mit einem Tragprofil (2) einer Tragvorrichtung (10) und zur Abstützung wenigstens einer Kabelführungsvorrichtung (31, 32), wie eines Kabelkanals, einer Kabelbahn, einer Kabelpritsche oder einer Gitterbahn, mit einem Tragarm (11A; 11B), der mit einer Kopplungsvorrichtung (12) verbunden ist, mittels der der Ausleger (1) mit dem Tragprofil (2) verbindbar ist, **dadurch gekennzeichnet, dass** zwei Tragarme (11A, 11B) vorgesehen sind, die je wenigstens in einer ersten oder zweiten Richtung ausgerichtet oder ausrichtbar durch ein Anschlussstück (113) gegebenenfalls lösbar mit der Kopplungsvorrichtung (12) verbunden sind, wobei die Anschlussstücke (113) gelenkig und um eine oder je um eine Gelenksachse gegeneinander drehbar oder in der gewählten Ausrichtung kraftschlüssig oder formschlüssig mit der Kopplungsvorrichtung (12) verbunden sind.

2. Ausleger (1) nach Anspruch 1, **dadurch gekennzeichnet,**
a) **dass** die Kopplungsvorrichtung (12) ein Montageteil (122) aufweist, welches eine Kopplungswelle (121) hält, die mit den Anschlussstücken (113) der beiden Tragarme (11A, 11B) verbunden ist; oder
b) **dass** die Kopplungsvorrichtung (12) ein Montageteil (122) aufweist, welches zwei Kopplungswellen (121) hält, von denen jede mit einem der Anschlussstücke (113) eines der beiden Tragarme (11A, 11B) verbunden ist; oder
c) **dass** die Kopplungsvorrichtung (12) für den ersten und zweiten Tragarm (11A, 11B) je nächstens zwei in unterschiedliche Richtungen ausgerichtete Kopplungsarme (128) aufweist, an die die Tragarme (11A, 11B) wahlweise ankoppelbar sind.

3. Ausleger (1) nach Anspruch 1 oder 2, **dadurch gekennzeichnet, dass** wenigstens drei Stützpunkte (P1, P2, P3) vorgesehen sind und/oder dass wenigstens drei Stützpunkte (P1, P2, P3) vorgesehen sind, wobei der wenigstens eine auf der Seite der Kopplungsvorrichtung (12) angeordnete Stützpunkt (P1, P2, P3) ganz oder teilweise durch linienförmige Stützelemente (L1-2; L1-3) miteinander verbunden sind.

4. Ausleger (1) nach Anspruch 3, **dadurch gekennzeichnet, dass** die Tragarme (11A, 11B) je ein von der Kopplungsvorrichtung (12) entferntes distales Endstück (114) und ein der Kopplungsvorrichtung (12) zugewandtes proximales Anschlussstück (113) aufweisen und dass
a) die Auflagestücke (111) der auseinander gedrehten Tragarme (11A, 11B); und/oder
b) die Endstücke (114) und die Anschlussstücke (113) der auseinander gedrehten Tragarme (11A, 11B); und/oder
c) die auseinander gedrehten Tragarme (11A, 11B) und wenigstens ein Teil der Kopplungsvorrichtung (12), gegebenenfalls der Kopplungswelle (121),
die Stützpunkte (P1, P2, P3) und/oder die linienförmigen Stützelemente (L1-2; L1-3) einer Tragfläche bilden, auf die wenigstens eine Kabelführungsvorrichtung (31, 32) aufsetzbar ist.

5. Ausleger (1) nach einem der Ansprüche 1 - 4, **dadurch gekennzeichnet, dass** die Endstücke (114) und/oder die Anschlussstücke (113) der Tragarme (11A, 11B) und/oder die Kopplungsvorrichtung (12) mit Halteelementen (118) versehen sind, die dem Halten der aufgesetzten Kabelführungsvorrichtung (31; 32) dienen und dazu seitlich an der Kabelführungsvorrichtung (31; 32) anliegen oder in eine Öffnung der Kabelführungsvorrichtung (31; 32) eingreifen.

6. Ausleger (1) nach Anspruch 5, **dadurch gekennzeichnet, dass** die Halteelemente (118) an den Tragarmen (11A, 11B) angeformt oder in den Tragarmen (11A, 11B) fest oder verschiebbar oder federelastisch verschiebbar gehalten sind.

7. Ausleger (1) nach einem der Ansprüche 1 - 6, **dadurch gekennzeichnet,**
a) **dass** die Anschlussstücke (113) der Tragarme (11A, 11B) entlang der Gelenkachse gegeneinander versetzte hülsenförmige Elemente aufweisen und ineinander verschiebbar sind, sodass die hülsenförmigen Elemente koaxial zur Gelenkachse ausgerichtet sind; oder
b) **dass** die Anschlussstücke (113) der Tragarme (11A, 11B) voneinander getrennt mit der Kopplungsvorrichtung (12) verbunden sind.

8. Ausleger (1) nach einem der Ansprüche 1 - 7, **dadurch gekennzeichnet, dass** die Anschlussstücke (113) einstückig an den Tragarmen (11A, 11B) angeformt und mit vorzugsweise hülsenförmigen Kopplungselementen versehen sind oder dass die Anschlussstücke (113) formschlüssig und/oder kraftschlüssig mit den Tragarmen (11A, 11B) verbunden und mit vorzugsweise hülsenförmigen Kopplungselementen versehen sind.

9. Ausleger (1) nach einem der Ansprüche 1 - 8, **dadurch gekennzeichnet, dass** die Tragarme (11A, 11B) ein L-Profil mit einem Auflagestück (111) und einem daran anschliessenden Seitenstück (112) oder ein U-Profil mit einem Auflagestück (111) und zwei beidseitig daran anschliessenden Seitenstücken (112) aufweisen, wobei das Auflagestück (111) vorzugsweise mit runden, polygonalen oder längsgestreckten Öffnungen (110) versehen ist.

10. Ausleger (1) nach einem der Ansprüche 1 - 9, **dadurch gekennzeichnet, dass** die Tragarme (11A, 11B) gleiche Längen oder unterschiedliche Längen aufweisen und/oder dass die Tragarme (11A, 11B) einstückig oder lösbar mit der Kopplungsvorrichtung (12) verbunden sind und/oder dass die Tragarme (11A, 11B) derart zwischen Endanschlägen gegeneinander drehbar sind, dass sie einen Winkel einschliessen können, der im Bereich von 0° - 270°, oder bevorzugt in einem Bereich von 0° - 180°, oder weiter bevorzugt in einem Bereich von 0° - 120° liegt.

11. Ausleger (1) nach einem der Ansprüche 1 - 10, **dadurch gekennzeichnet, dass** die Kopplungsvorrichtung (12) wenigstens ein elastisches Element, wie eine Feder, umfasst, mittels dessen die Tragarme (11A, 11B) auseinander gedreht werden und/oder dass die Tragarme (11A, 11B) Schall absorbierende Elemente (19) aufweisen.

12. Tragvorrichtung (10) umfassend wenigstens ein Tragprofil (2), wie ein Metallkörper, gegebenenfalls eine Deckenstütze, oder ein Mauerkörper, an dem wenigstens ein Ausleger (1) nach einem der Ansprüche 1 -11 montiert ist.

13. Tragvorrichtung (10) nach Anspruch 12, **dadurch gekennzeichnet,**
a) **dass** die die Tragarme (11A, 11B) des wenigstens einen Auslegers (1, 1A, 1B) eine Kabelführungsvorrichtung (31, 32), wie einen Kabelkanal, eine Kabelbahn, eine Kabelpritsche oder eine Gitterbahn, stützen und dazu gegenüber der Querachse der Kabelführungsvorrichtung (31, 32) vorzugsweise um einen Winkel im Bereich von +/- 23° - 66° geneigt sind, oder
b) **dass** jeder der Tragarme (11A, 11B) des wenigstens einen Auslegers (1, 1A, 1B) je eine Kabelführungsvorrichtung (31, 32), wie einen Kabelkanal, eine Kabelbahn, eine Kabelpritsche oder eine Gitterbahn, stützt, die parallel zueinander oder geneigt zueinander ausgerichtet und gegebenenfalls durch eine Winkelstück miteinander verbunden sind.

14. Tragvorrichtung (10) nach Anspruch 12 oder 13, **dadurch gekennzeichnet, dass** die Tragprofile (2) alternierend auf der einen Seite und der anderen Seite einer zugeordneten Kabelführungsvorrichtung (31, 32) angeordnet sind.

15. Tragvorrichtung (10) nach Anspruch 12, 13 oder 14, **dadurch gekennzeichnet, dass** der Stützabstand (s) zwischen zwei benachbarten Tragprofilen oder Deckenstützen (2) entsprechend der Summe der Abschnitte der Kabelführungsvorrichtung (31, 32), die von den Tragarmen (11A, 11B) gestützt sind, und dem Auslegerabstand (a) zwischen den Endstücken der einander zugewandten Tragarmen (11A, 11B) der Ausleger (1; 1A, 1B) gewählt wird, der entsprechend der Festigkeit der aufzunehmenden Kabelführungsvorrichtung (31, 32) und der zu tragenden Last festgelegt wird.
